# EUROPEAN PATENT SPECIFICATION

(11) **EP 2 406 492 B1**
(45) Date of publication and mention of the grant of the patent: **07.05.2014**
(21) Application number: 10707551.7
(22) Date of filing: 11.03.2010
(51) Int. Cl.: F03D 11/00, F03D 7/02, F03D 1/00, F03D 1/06

(54) **BLADE MOUNTING**
SCHAUFELBEFESTIGUNG
MONTAGE DE PALE

(30) Priority: 13.03.2009 SE 0950152; 11.06.2009 US 186182 P
(43) Date of publication of application: 18.01.2012
(73) Proprietor: GE Wind Energy (Norway) AS, 0278 Oslo (NO)
(72) Inventor: LINDBERG, Mikael, S-652 30 Karlstad (SE); HEDBERG, Johan, S-663 92 Hammaro (SE)
(74) Representative: Bedford, Grant Richard
(86) International application number: PCT/EP2010/053133
(87) International publication number: WO 2010/103086

(56) References cited:
- EP-A2- 1 167 755
- WO-A1-2005/090780
- DE-A1-102007 058 746
- US-A1- 2004 253 109
- US-A1- 2006 228 220

## Description

The present invention concerns the area of construction of a wind power plant and more specifically to an arrangement and a method for mounting rotor blades to a rotor hub of a wind power installation in situ.

Various aspects of the invention also concern a wind power installation implementing the method.

The most common way for mounting rotor blades to a rotor hub is to perform the mounting on the ground, i.e. all of the rotor blades are fitted to the flange of the rotor hub, which rotor hub is resting on the ground. When all the rotor blades have been fitted and are on place, the rotor hub with the mounted rotor blades are lifted up to the top of the tower. The lifting of the rotor hub with several rotor blades mounted to the hub, is a difficult and risky operation because of the high total weight of the rotor hub and the rotor blades together. The lifting is weather dependent and can generally only be performed on calm days with no wind. The geographic places chosen for wind power plants to be built on are preferably windy places and it can therefore be understood that the mounting normally will be very costly.

Also in situ mounting of one blade at the time is known. The in situ mounting of rotor blades on the rotor hub of a wind power plant is accompanied by at least two problems to deal with, namely lifting the rotor blade from the ground up to the rotor hub and, after having mounted the first rotor blade to the rotor hub, handling the considerable imbalance which has been introduced due to the one-sided load of the blade. It is known to use mobile cranes for in situ mounting, whereby a rotor blade is lifted by the crane and fixed in situ to the rotor hub. The crane picks up the rotor blade at the base of the wind power installation and takes it to the rotor blade connection of the hub of the wind power installation so that the rotor blade can be connected to the hub.

A disadvantage of mobile cranes is that they must always be on site when the rotor blades are to be mounted to the hub of the wind power installation. The cranes have to be large enough in order to manage to lift the rotor blades all the way up to the rotor blade connection of the hub.

Furthermore, the ground surrounding the wind power plant may not be smooth and even but mountainous or hilly leading to difficulties in transporting the huge mobile crane to the site.

Using a crane for the mounting of the rotor blades is combined with big expenses, either for the rental or for the owing of the crane as well as for the transportation of the crane.

After having lifted and mounted the first rotor blade to the rotor hub, a considerable imbalance due to the one-sided load of the blade is introduced. In the next step of the process, when the rotor hub is further rotated into the mounting position for the next blade, the imbalance leads to a considerable torque of the rotor hub to be overcome.

The document US 2006/0228220 describes a method for mounting a rotor blade of a wind power installation without using a crane. The rotor blades are lifted by cables and winches.

EP 1 167 755 describes a locking device for the rotor of a wind turbine. The device comprises a toothed disc and projections entering between disc teeth.

The document US 2004/0253109 describes a way to avoid the unintended rotary movement of the rotor hub during mounting of the rotor blade by using weights which are mounted to the flange of the rotor hubs. For a three-blade wind power plant the rotor hub is equipped with three weights already on the ground. The rotor hub is then transported to into the installation situation by a crane so that the rotor blades can be mounted in situ in exchange for the weights. The solution of the problem with the unintended rotary movement of the rotor hub during mounting of the rotor blade according to the US-document leads to the handling of heavy weights which have to be removed during the mounting process. This is a heavy, unsecure and time consuming solution.

It is one object of the present invention to overcome the drawbacks and disadvantages of the above described prior art. The solution according to various aspects of the present invention provide a fast, safe and secure method for the blade mounting operation.

This can be obtained by an arrangement for in situ mounting of rotor blades to a rotor hub of a wind power plant. In the arrangement the rotor hub/shaft, preferably via a brake disc, is caused to rotate by a means for rotation and since the brake disc (or possibly another device) is in connection with the rotor hub in such a way that when it rotates a certain degree of angle around its axis, it will cause the rotor hub to rotate the same degree of angle around the axis of the rotor hub. Due to the rotation the hub comes into a desired position. The means for rotation is then in an end position, and a securing means secures the device from rotation, e.g. by means of locking. The brake disc is held in the desired position by the locking device and thereby preventing the rotor hub from further rotation.

In the following example the wind power installation has three rotor blades, but the same process and arrangement can of course be used for wind power installations with two or four or more blades.

According to a further aspect of the invention the securing means is arranged to provide further adjustment of the rotation of the brake disc.

Thanks to the arrangement according to certain aspects of the invention, the mounting of the second rotor blade and the next-coming rotor blades to the rotor hub can be carried out in a safe and secure manner. The mounting operation can also be carried out in a fast and cost-effective manner. The investment cost of the equipment needed for various embodiments of the invention is low.

Various aspects and embodiments of the invention will be described in more detail with reference to the enclosed figures, in which:
Fig. 1 shows an overview of a wind power plant comprising the tower and a first rotor blade to be fitted to the rotor hub,
Fig. 2 shows a side view of the brake disc, the locking device and the means for rotation,
Fig. 3 shows a side view of the rotor hub connected to the brake disc,
Figs. 4a-4d show front views of the brake disc as well as the locking device and means for rotation, having different positions to each other, and
Fig. 5 shows a front view of the brake disc where the locking device and the means for rotation is in their resting positions.

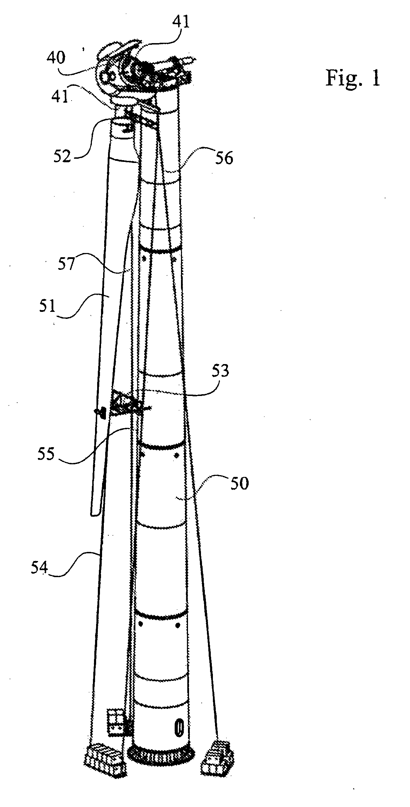

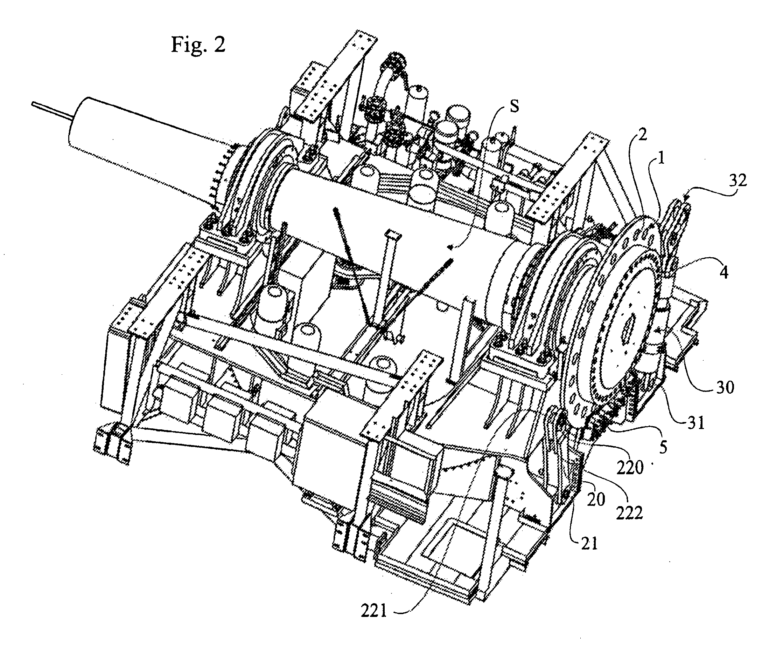

Fig. 1 is an overview of a wind power plant. A rotor blade 51 is being lifted up to the rotor hub 40 at the upper part of the tower 50 in order to be fitted with its rotor blade connection 52 to the flange 41 of the rotor hub 40, which is connected to the main shaft by means of a hub flange (shown in Fig. 2).

Fig. 2 is a side view of the interior of the machine housing of the wind power plant. A brake disc 1 is centrally mounted on the main shaft S of the wind turbine and has a large diameter, normally in the range of 1,5-3 meters. The brake disc 1 extends with a portion of its periphery into the gap of a number of brake units 5. The brake disc 1 is provided with connecting means 2, consisting of a number of through bores evenly distributed on the brake disc 1 at a certain distance from the axis of the brake disc 1. The number of through holes and the degree of angles between the through holes may vary depending on the different needs. A locking device 20 is positioned in a radial direction of the brake disc 1. The locking device 20 is pivotally arranged around a fixed position 21 at one end. At the other end of the locking device 20 there are two parallel plates 221, 222 having a coaxial through hole 220, which plates 221, 222 are arranged to be positioned on a respective side of the brake disc 1, when pivoted radially, inwardly. On the opposite side of the brake disc 1, in the radial direction, there is arranged a means for rotation 30 of the brake disc 1, which is also pivotally arranged around a fixed position 31, with one of its ends. At the other end there is a fastening means 32. The hub flange 4 is shown.

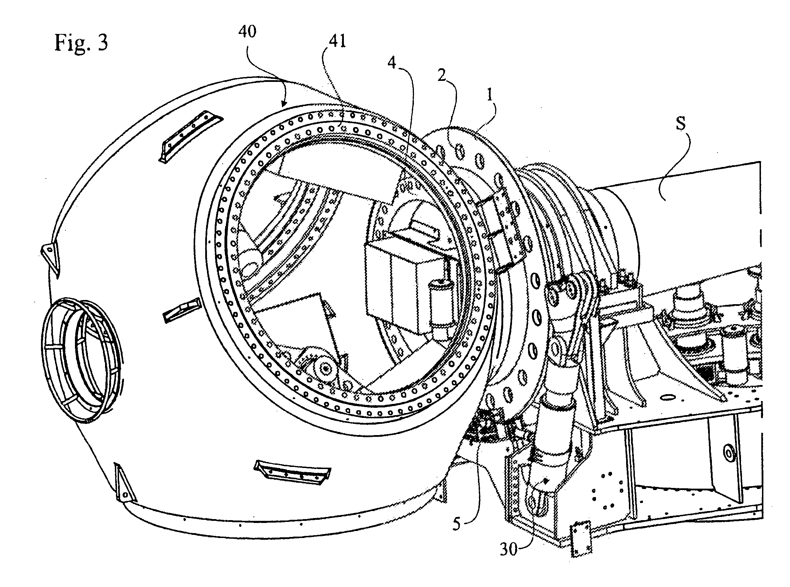

Fig. 3 is a perspective side view of the rotor hub 40 connected to the hub flange 4. It also shows the means for rotation 30 of the brake disc 1. The blade flange 41 of the rotor hub 40 corresponds to the flange 52 of the rotor blade. The hub 40 is arranged with three blade flanges 41 and for three blades 51.

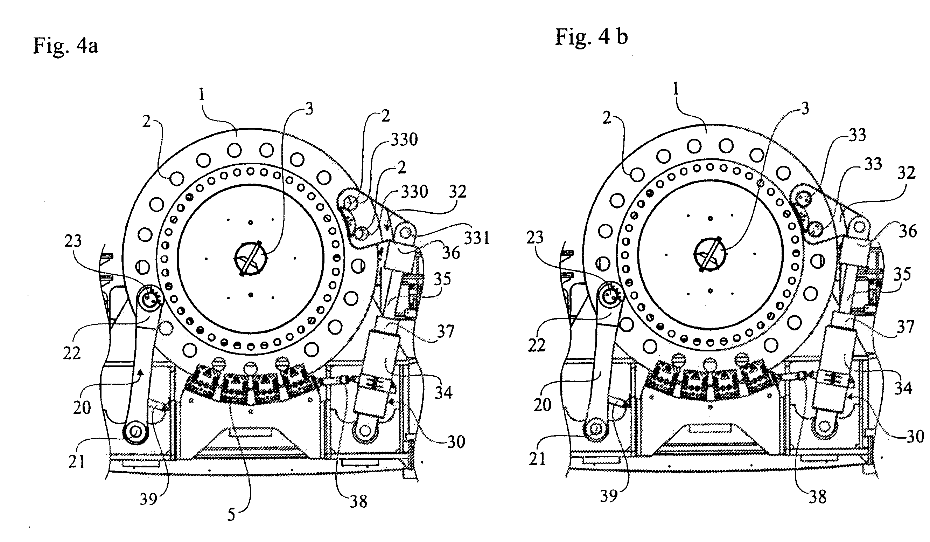

Fig. 4a shows a front view of the brake disc 1. The locking connection 22 of the locking device 20 is connected via a pin 23 to one through hole 2 of the brake disc 1, thereby locking the position of the brake disc 1 and preventing the brake disc 1 from rotating around its axis 3. The means for rotation, here presented as a hydraulic unit 34, 35, is not connected to the brake disc 1. It is shown that the fastening means 32 comprises a claw like member, having two parallel plates, arranged with a pair of coaxial through holes 330 that correspond to two adjacent through holes 2 of the brake disc 1.

In Fig. 4a the through bores 330 of the fastening means 32 are almost in line with a pair of holes 2 of the brake disc 1.

The means for rotation 30 of the brake disc is in the preferred embodiment a hydraulic unit 34, 35. The fastening means 32 of the means for rotation 30 is pivotally positioned around a pin 331 at the top end of piston 35, providing good flexibility to come into the exact position for being connected to the brake disc 1. In Fig. 4a the means for rotation 30 is in an expanded position.

Fig. 4b shows the same view as Fig. 4a, but in a stage where the fastening means 32 is connected to the brake disc 1. This connection is usually made by screw means or pins 33 extending through through bores 330 of the fastening means 32 and through bores 2 of the brake disc 1. A pivoting device 38 (e.g. a hydraulic unit) has been used to move the unit 30 and fastening means 32 into exact position for aligning the holes 330,2.

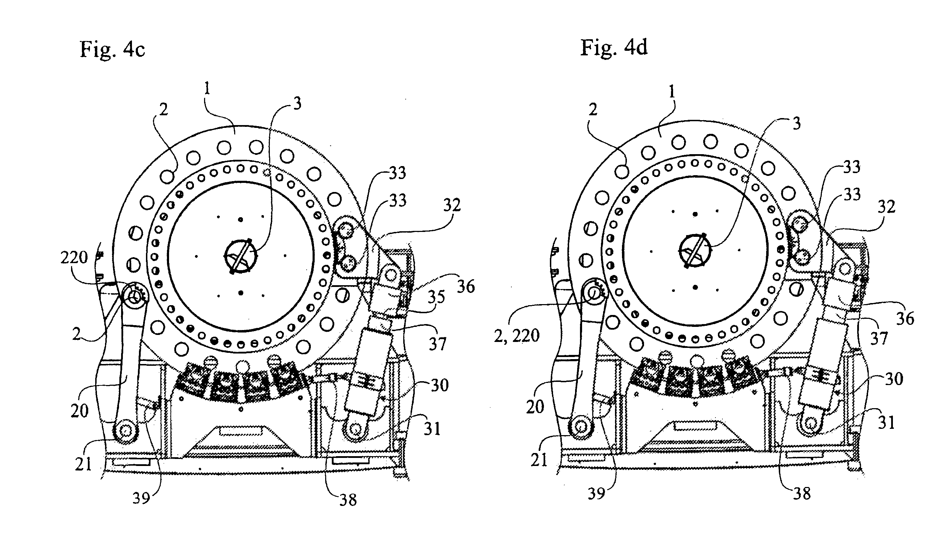

In Fig. 4c the locking device 20 is disconnected from the brake disc 1, i.e. by removing the pin 23. The through bore 220 of the locking device 22 (shown in Fig. 4a) is shown. Further the means for rotation 30 has been moved to a contracted position. The fastening means 32 is connected to the brake disc 1.

In Fig. 4d, the means for rotation 30 is presented as a hydraulic unit 34, 35 where a female portion sleeve 36 of the hydraulic piston rod 35, is connected to a male portion collar 37 of the hydraulic cylinder 34. The sleeve 36 is provided with threads on its inside surface and these threads correspond to the threads on the envelope surface of the collar 37. Hence, the sleeve 36 may be screwed on to the collar 37. This facilitates a rigid connection between the sleeve 36 and the collar 37 provides a locking of the hydraulic unit 34, 35, thereby securing the hydraulic piston rod 35 from a sudden and undesired expansion.

Furthermore, the through bore 220 of the locking connection 22 of the locking device 20 is in position for a re-connection of the connecting device 2 of the brake disc 1 via through bores 220 and 2.

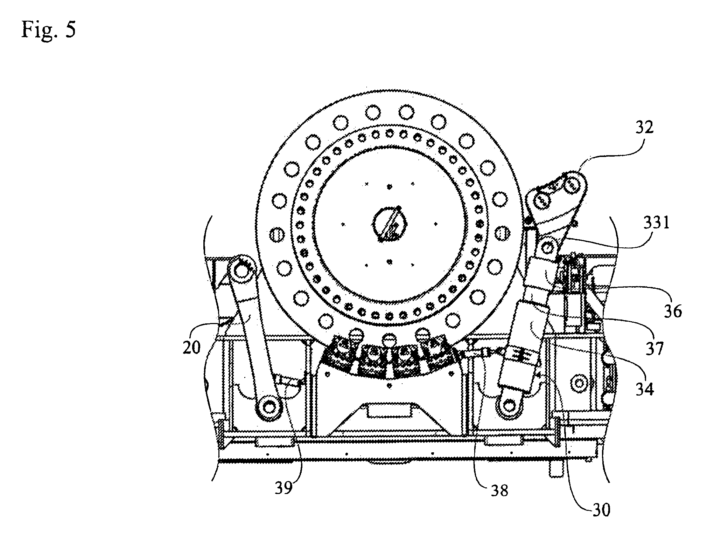

Fig. 5 shows the resting position of the locking device 20 and the means for rotation 30. The locking device 20 has been moved by a pivoting device 39 (e.g. a hydraulic unit) in a radial direction away from the brake disc 1 thereby providing free space between the locking device 20 and the brake disc 1. The other pivoting device 38 has been used to move the means for rotation 30 to its resting position. There is a distance (free space) between the brake disc 1 and the means for rotation 30 in its resting position. Also, the fastening means 32 has been rotated around the pin 33 outwardly to a resting position, i.e. moved away from the brake disc 1.

These resting positions of the locking device 20 and the means for rotation 30 are for instance used when all rotor blades have been mounted to the rotor hub and the wind power plant is operating.

In a preferred embodiment, the first rotor blade 51 is lifted from the ground up to the top portion of the tower and fitted to the annular flange 41 of the rotor hub. From a front side view the rotor blade 51 is then held in a vertical or almost vertical position during the mounting.

Before the lifting of the rotor blade, when the rotor blade is in its horizontal position on the ground, the end 52 of the rotor blade (the end which will be fitted to the rotor hub) is connected to two winch ropes 56, 57. These winch ropes 56, 57 runs up to guiding wheels, or sheaves, located on the tower top close to the hub 41. The winch ropes passes over the sheaves, changes direction and continues towards lifting winches on the ground. The lifting winches may be electrically, hydraulically, pneumatically driven or driven by a internal combustion engine.

When the rotor blade 51 has been hoisted up to a substantially vertical position by the winch system the tip of the rotor blade (the end opposite to the end which is to be fitted to the flange of rotor hub 41) is connected to a safety device 53 arranged to secure the rotor blade and to maintain the exact position of the rotor blade even if the winds are strong. This safety device runs on two cables 54, 55 which cables are stretched substantially parallel to each other and to the tower from the hub region of the nacelle of the wind power plant to the foundation of the wind power plant. The safety device is provided with means allowing the safety device to be guided along the way up to the rotor hub. This means are placed in the end opposite the end which is connected to the rotor blade. An example of means allowing the safety device to be guided could be wheels. The purpose with the wheels is to let them run continuously along the outer surface of the tower when the rotor blade is lifted. If it is windy when the lifting operation is carried out, the safety device secures that the rotor blade will not be pushed or turned by the wind and collide with the tower which could lead to damage on the rotor blade as well as on the tower. The safety device could also be equipped with extra wheels on protruding arms which would lessen the risk of equipment touching and damaging the tower.

When the first rotor blade 51 has been fitted to the rotor hub 40, the rotor hub 40 has to be rotated 120 degrees in order to get the next flange of the rotor hub 41 in position for the mounting of the second rotor blade.

The process for rotation of the rotor hub 40 having a first rotor blade 51 fitted to the rotor hub 40 and mounting of the second rotor blade may start by applying the park break 5 to the brake disc 1 in some installations. The means for rotation 30 of the brake disc 1 in the preferred embodiment is a hydraulic unit 34, 35. The hydraulic unit 34, 35 is expanded to its maximum stroke position or near its maximum stroke position and the fastening means 32 of the hydraulic unit 34, 35 is connected to the brake disc 1. The connection is usually made by screw means or pins, which extend through through bores 330 of the fastening means 32 and through bores 4 of the brake disc 1. The fastening means 32 is now in its upper position. The hydraulic unit 34, 35 starts to contract itself thereby rotating the brake disc clockwise.

The fastening means 32 moves to its lower position. When the hydraulic cylinder has been contracted to a certain contracted position, the brake disc 1 has been rotated about 30 degrees causing the rotor hub 40 to rotate the same degree of angle around the axis of the rotor hub. Hence, after an appropriate number of "rounds" the rotor hub 40 has been rotated 120 degrees and the next flange 41 of the rotor hub 40 for fitting the second rotor blade, 51 has come in position.

In order to avoid the unintended rotary movement of the rotor hub 40 during retake of the means for rotation 30, and also during mounting of the rotor blade, the rotor hub has to be held in position. This is done by a rigid locking device 20. The locking device 20 is rotatably arranged around a fixed position 21 in its one end and provided with a locking connection 22 consisting of a through bore 220 at its other end. The through bore 220 of the locking connection 22 is arranged to fit into the through bore of the connecting device 2 of the brake disc 1. A screw means or pin 23 are let into the bores. The position of the brake disc 1 is now rigidly and safely locked, thereby locking the position of the rotor hub. The rigid locking device 20 carries the torques which occur and holds the brake disc 1 in a fixed position during the time it takes to disconnect the hydraulic unit 34, 35 from the brake disc 1 and to re-connect the hydraulic unit 34, 35 to another position on the brake disc 1.

In order to being able to connect the locking connection 22 of the locking device 20 to the connecting device 2 (e.g. the through bore) of the brake disc 1, a pivoting device 38 steers and adjusts the position of the locking device 20 to the exact position for the connection.

In a further embodiment an accidental and unwished expansion of the means for rotation 30, e.g. the hydraulic unit 34, 35, is prevented when the hydraulic unit 34, 35 is in a certain contracted position (normally close to full contraction). This is done by a securing means which comprises a female portion 36 and a male portion 37. The female portion is in this embodiment a sleeve 36 and the male portion 37 a collar. The sleeve 36 is provided with several threads on its inside surface and these threads correspond to the threads on the envelope surface of the collar 37. The sleeve 36 is screwed on the collar 37 several revolutions thereby securing the hydraulic unit 34, 35 from expansion.

The securing of the hydraulic unit 34, 35 from expansion in its contracted position by the securing means may be an important security operation, in many installations.

Another feature of the securing means is that it provides further adjustment of the rotation of the brake disc 1 in such a way that in order to get the connecting device 2, i.e. the through bore 2, in the exact position for the connection to the locking connection 22, i.e. the through bore 220, the number of revolutions that the sleeve 36 is screwed on the collar 37 can be variable and adjustable. The final adjustment/tuning of the disc 1 into the exact position is then carried out without using hydraulic power.

Still another feature of the securing means 36, 37 is that the means also improves security regarding the work with connecting the locking device 20 to the brake disc 1. This work which may be done by hand and thanks to the extra securing means 36, 37 it may be carried out in a safe manner without the risk of accidents caused by a sudden and unexpected rotation of the brake disc 1. This may be an important feature of the invention, in some installations.

When having secured the means for rotation 30 from a sudden and undesired expansion by the securing means, the locking device 20 is connected to the brake disc 1 in a manner earlier described.

The rotor hub 40 is now positioned and ready for the fitting of the second rotor blade to the flange of the rotor hub 41. The second rotor blade can now be fitted to the flange of the rotor hub in a safe manner thanks to the locked position of the rotor hub.

When the second rotor blade has been fitted to the rotor hub 40, the sleeve 36 of the hydraulic unit 34, 35 is disconnected from the collar 37 and thereby not preventing the hydraulic cylinder from expansion any longer. The fastening means 32 of the hydraulic unit 34, 35 is disconnected from the brake disc 1. The hydraulic unit 34, 35 expands to its maximum stroke position or to a position near its maximum stroke position and the fastening means 32 is re-connected to the brake disc 1. The locking connection 22 is now disconnected from the connecting device 2 of the brake disc 1 thereby not hindering the brake disc 1 from rotation.

The hydraulic unit 34, 35 once again rotates the brake disc 1 clock-wise by contracting itself to its minimum stroke position or to a position near its minimum stroke position. The sleeve 36 is screwed on the collar 37 as earlier described, the locking device 22 is connected to the brake disc 1 and the rotor hub is thereby once again positioned and ready for the fitting of the third rotor blade to the flange of the rotor hub.

After having mounted the third rotor blade to the rotor hub, the locking device 20 and the hydraulic unit 34, 35 is disconnected from the disc brake 1. The pistons 38 and 39 steer the hydraulic unit 34, 35 and the locking device 20 to their resting positions shown in Fig. 5.

As evident from above using both the locking device 20 and the securing means 36, 37 at the same time for securing the rotor hub 40 from sudden and unwished rotations lead to a doubled security when mounting rotor blades 51. However, in some installations only one security means may be sufficient.

In still a further embodiment the rotation of the brake disc, and as a consequence thereof, the rotation of the rotor hub 40, is performed counter-clockwise. The fastening device 32 of the hydraulic unit 34, 35 is then connected to the disc brake 1 when the hydraulic unit 34, 35 is in a contracted position. The hydraulic unit 34, 35 starts to expand thereby rotating the brake disc 1 counter-clockwise. When the rotation of the brake disc 1 reaches a certain degree of angle (normally close to full expansion of the unit 30), the locking device 20 is connected to the brake disc 1, thereby securing the brake disc 1 from further rotation. As mentioned above this may provide sufficient safety in many installations.

However, also according to this embodiment double security may be used by means of a blocking device that prevents contraction of the piston 35. If hypothetically something in the hydraulic system would break, thereby causing a sudden hydraulic pressure drop, (having the hydraulic unit 34, 35 is in its expanded position) before having locked the rotor hub 40, (i.e. before connecting the locking device 20 to the brake disc 1), the contraction of the hydraulic unit 34, 35 can be prevented by an additional securing means (blocking device, not shown) which could for instance be an arched, elongated piece of metal adapted to the diameter of the piston rod and having almost the same length as the piston rod, thereby securing the piston rod from contraction. As a result thereof, the risk of having an unwished rotation of the rotor hub 40 is prevented.

The security arrangements described above, regarding the securing of the rotor hub 40 from undesired rotation, may also be used when other operations then blade mounting are to be done, e.g. repairing of the brake units 5.

The wind power plant according to various embodiments of the invention is a big plant having a passenger lift inside the tower. The process may accordingly be assisted by persons in the machine housing. The method is fast since it merely takes about 20 minutes to connect the unit 30, unlock the locking device 20, rotate the brake disc and repeat the procedure until 120 degrees rotation has been achieved. This means that the process according to various aspects of the invention is a fast and easy way to mount rotor blades on a rotor hub. The arrangement is not merged with big investment cost, but can rather be seen as an investment of low cost. It is a big advantage to have the equipment of the arrangement always on place.

The wind turbine of the wind power plant described has no gear box but for those machines that have gearboxes the arrangement according to various embodiments of the invention could be used in the same manner as on machines without gearboxes.

The arrangement according to the invention can of course be used for dismantling of the rotor blades if a need for reparation or exchange of the rotor blades arises.

As will be understood by those skilled in the present field of art, numerous changes and modifications may be made to the above described and other embodiments of the present invention, without departing from its scope as defined in the appending claims.

The locking device 20 has two parallel plates 221, 222 having a coaxial through hole 220, which plates 221, 222 are arranged to be positioned on a respective side of the brake disc 1. In a further embodiment the locking device could be provided with only one plate (221 or 222).

The final adjustment of the rotation of the disc 1 in order to locate the connecting device 2 in the exact position for the connection to the locking connection 22 of the locking device 20 can be done hydraulically.

The fastening means 32 could in another embodiment be arranged in such a way that the head itself of the piston rod is connected directly to the disc brake 1.

The means for rotation 30 of the disc 1 could of course be something else than a hydraulic unit 34, 35, e.g. electrical driven cylinder or actuator or pneumatic cylinder.

It is evident for a man skilled in the art to find other solutions regarding the securing means. The male portion 37 and the female portion 36 of the securing means could for instance be ratchet means or a releasable claw coupling.

The securing means 36, 37 can be arranged in such way that when the securing means 36, 37 secures the means for rotation 30 from expansion, the securing means 36, 37 does not provide further adjustment of the rotation of the disc 1. The female portion 36 could for instance have a fixed but elastic position in relation to the disc 1. When the female portion 36 is connected to the male portion 37, the position of the disc 1 is not affected.

If an even higher degree of safety is desired when the mounting of rotor blades or repairing of the brake units are being performed, the connection of the locking device 20 and/or securing means 36, 37 could be arranged to be remotely controlled.

## Claims

1. An arrangement for in situ mounting of rotor blades to a rotor hub of a wind power plant comprising rotor blades, a rotor hub (40), a disc (1), a means for rotation (30) of the disc (1) around its axis, the disc (1) being connected to the rotor hub (40) in such a way that when the disc (1) rotates a certain degree of angle around its axis (3) it will cause the rotor hub (40) to rotate the same degree of angle around the axis of the rotor hub, the disc (1) being provided with a connecting device (2), wherein the disc (1) is caused to rotate by the means for rotation (30) and when the means for rotation (30) comes into a desired position, the disc (1) is secured by a securing means (20; 36, 37); **characterized in that** the securing means comprises a sleeve (36), having threads on its inner surface and a collar (37), having corresponding threads on its envelope surface and that when the sleeve (36) is screwed onto the collar (37), the means for rotation (30) is secured from expansion.

2. The arrangement according to claim 1, **characterized in that** the securing means comprises a male portion (23; 37) and a at least one female portion (2; 220; 36) respectively, and that one of the portions has a fixed position in relation to the disc (1) during rotation and the other portion has a non-fixed position in relation to the disc (1).

3. The arrangement according to any preceding claim, **characterized in that** the securing means (36, 37) is arranged to provide further adjustment of the rotation of the disc (1).

4. The arrangement according to any preceding claim, **characterized in that** the securing means comprises a pivotal locking device (20) arranged to prevent the rotor hub (40) from further rotation.

5. The arrangement according to any preceding claim, **characterized in that** the disc is a brake disc (1).

6. The arrangement according any preceding claim, **characterized in that** the connecting device (2) of the brake disc (1) consists of several through bores evenly distributed on the brake disc (1) at a certain distance from the axis (3) of the brake disc (1).

7. The arrangement according to any preceding claim, **characterized in that** the locking device (20) is rotatably arranged around a fixed position (21) in its one end and provided with a locking connection (22) at its other/opposite end, the locking connection (22) being arranged to fit into the connecting device (2) of the brake disc (1).

8. The arrangement according to any preceding claim, **characterized in that** the means for rotation (30) is a hydraulic cylinder (34) and a hydraulic piston (35).

9. The arrangement according to claim 8, **characterized in that** the hydraulic cylinder (34) has a fastening means (32) mounted on its piston (35), the fastening means (32) having at least one through bore (330).

10. A process for in situ mounting of rotor blades to a rotor hub of a wind power plant comprising rotor blades, a rotor hub (40), a disc (1), a means for rotation (30) of the disc around its axis (3), the disc (1) being in connection with the rotor hub (40) in such a way that when the disc (1) rotates a certain degree of angle around its axis (3) it will cause the rotor hub (40) to rotate the same degree of angle around the axis of the rotor hub, the disc (1) being provided with a connecting device, wherein after having mounted the first rotor blade to the rotor hub the following steps take place:
a means for rotation (30) rotates the disc (1) around its axis (3)
when the means for rotation (30) comes into a desired stroke position, the means for rotation (30) is stopped to prevent further rotation and a securing means (20, 36, 37) is connected via the brake disc (1) or to lock the rotor hub (40) against rotation, via the brake disc (1); **characterized in that** the securing means comprises a sleeve (36), having threads on its inner surface and a collar (37), having corresponding threads on its envelope surface and that when the sleeve (36) is screwed onto the collar (37), the means for rotation (30) is secured from expansion.

11. The process according to claim 10, **characterized in that** when the last rotor blade (51) has been mounted on the rotor hub (40), the locking device (20) and means for rotation (30) is disconnected from the disc.

12. The process according to claim 10 or claim 11, **characterized in that** the means for rotation (30) is a hydraulic cylinder and a hydraulic piston (34, 35).

13. A wind power plant, **characterized in that** it comprises the arrangement according to any of claims 1 to 9.

## Patentansprüche

1. Anordnung für die lokale Montage von Rotorblättern an einer Rotornabe einer Windkraftanlage, die Rotorblätter, eine Rotornabe (40), eine Scheibe (1), ein Mittel zum Rotieren (30) der Scheibe (1) um ihre Achse umfasst, wobei -die Scheibe (1) mit der Rotornabe (40) derart verbunden ist, dass beim Rotieren der Scheibe (1) um einen bestimmten Winkelgrad um ihre Achse (3) dies bewirkt, dass die Rotornabe (40) um denselben Winkelgrad um die Achse der Rotornabe rotiert, wobei die Scheibe (1) mit einer Verbindungsvorrichtung (2) versehen ist, wobei die Scheibe (1) durch das Mittel zum Rotieren (30) in Rotation versetzt wird, und wenn das Mittel zum Rotieren (30) in eine gewünschte Position kommt, wird die Scheibe (1) durch ein Befestigungsmittel (20; 36; 37) fixiert; **dadurch gekennzeichnet, dass** das Befestigungsmittel eine Muffe (36) umfasst, die Gewinde auf der Innenseite und eine Manschette (37) umfasst, die entsprechende Gewinde auf ihrer Hülloberfläche hat, und dass wenn die Muffe (36) auf die Manschette (37) geschraubt wird, das Mittel zum Rotieren (30) gegen Ausdehnung gesichert wird.

2. Anordnung nach Anspruch 1, **dadurch gekennzeichnet, dass** das Befestigungsmittel einen bolzenartigen Teil (23; 37) bzw. mindestens einen innenrohrartigen Teil (2; 220; 36) umfasst und dass einer der Teile eine feste Position gegenüber der Scheibe (1) während der Rotation hat und der andere Teil keine feste Position gegenüber der Scheibe (1) hat.

3. Anordnung nach einem der vorherigen Ansprüche, **dadurch gekennzeichnet, dass** das Befestigungsmittel (36, 37) so angeordnet ist, dass es für die weitere Einstellung der Rotation der Schreibe (1) sorgt.

4. Anordnung nach einem der vorherigen Ansprüche, **dadurch gekennzeichnet, dass** das Befestigungsmittel eine zapfenartige Verriegelungsvorrichtung (20) umfasst, die so angeordnet ist, dass die Rotornabe (40) an der weiteren Drehung gehindert wird.

5. Anordnung nach einem der vorherigen Ansprüche, **dadurch gekennzeichnet, dass** die Scheibe eine Bremsscheibe (1) ist.

6. Anordnung nach einem der vorherigen Ansprüche, **dadurch gekennzeichnet, dass** die Verbindungsvorrichtung (2) der Bremsscheibe (1) aus mehreren Durchgangsbohrungen besteht, die gleichförmig auf der Bremsscheibe (1) in einem bestimmten Abstand von der Achse (3) der Bremsscheibe (1) verteilt sind.

7. Anordnung nach einem der vorherigen Ansprüche, **dadurch gekennzeichnet, dass** die Verriegelungsvorrichtung (20) drehbar um eine feste Position (21) an ihrem einen Ende angeordnet und mit einer Arretierungsverbindung (22) an ihrem anderen/entgegengesetzten Ende versehen ist, wobei die Arretierungsverbindung (22) so angeordnet ist, dass sie in die Verbindungsvorrichtung (2) der Bremsscheibe (1) passt.

8. Anordnung nach einem der vorherigen Ansprüche, **dadurch gekennzeichnet, dass** das Mittel zum Rotieren (30) ein Hydraulikzylinder (34) und Hydraulikkolben (35) ist.

9. Anordnung nach Anspruch 8, **dadurch gekennzeichnet, dass** der Hydraulikzylinder (34) ein Befestigungsmittel (32) hat, das auf seinem Kolben (35) befestigt ist, wobei das Befestigungsmittel (32) mindestens eine Durchgangsbohrung (330) hat.

10. Prozess für die lokale Montage von Rotorblättern an einer Rotornabe einer Windkraftanlage, die Rotorblätter, eine Rotornabe (40), eine Scheibe (1), ein Mittel zum Rotieren (30) der Scheibe um ihre Achse (3) umfasst, wobei die Scheibe (1) derart mit der Rotornabe (40) verbunden ist, dass bei Drehung der Scheibe (1) um einen bestimmten Winkelgrad um ihre Achse (3) bewirkt wird, dass die Rotornabe (40) sich um denselben Winkelgrad um die Achse der Rotornabe dreht, wobei die Scheibe (1) mit einer Verbindungsvorrichtung versehen ist, wobei nach der Montage des ersten Rotorblatts an der Rotornabe die folgenden Schritte erfolgen:
ein Mittel zum Rotieren (30) dreht die Scheibe (1) um ihre Achse (3)
wenn das Mittel zum Rotieren (30) eine gewünschte Hubposition erreicht, wird das Mittel zum Rotieren (30) angehalten, um eine weitere Rotation zu verhindern, und ein Befestigungsmittel (20, 36, 37) wird über die Bremsscheibe (1) damit verbunden, oder um die Rotornabe (40) gegen Rotation über die Bremsscheibe (1) zu arretieren; **dadurch gekennzeichnet, dass** das Befestigungsmittel eine Muffe (36) umfasst, die Gewinde auf der Innenfläche hat, und eine Manschette (37), die entsprechende Gewinde auf der Hüllfläche hat, und dass bei Aufschrauben der Muffe (36) auf die Manschette (37) das Mittel zum Rotieren (30) gegen Ausdehnung gesichert ist.

11. Prozess nach Anspruch 10, **dadurch gekennzeichnet, dass** nach der Montage des letzten Rotorblatts (51) an der Rotornabe (40) die Verriegelungsvorrichtung (20) und das Mittel zum Rotieren (30) von der Scheibe abgetrennt werden.

12. Prozess nach Anspruch 10 oder 11, **dadurch gekennzeichnet, dass** das Mittel zum Rotieren (30) ein Hydraulikzylinder und ein Hydraulikkolben (34, 35) ist.

13. Windkraftanlage, **dadurch gekennzeichnet, dass** sie die Anordnung nach einem der Ansprüche 1 bis 9 umfasst.

## Revendications

1. Aménagement de montage in situ de pales de rotor sur un moyeu de rotor d'une centrale d'éolienne comprenant des pales de rotor, un moyeu de rotor (40), un disque (1), un moyen de rotation (30) du disque (1) autour de son axe, le disque (1) étant raccordé au moyeu de rotor (40) de manière que, lorsque le disque (1) tourne d'un certain angle autour de son axe (3), il amène le moyeu de rotor (40) à tourner du même angle autour de l'axe du moyeu de rotor, le disque (1) étant pourvu d'un dispositif de raccordement (2), dans lequel aménagement le disque (1) est amené à tourner par le moyen de rotation (30) et, lorsque le moyen de rotation (30) parvient dans une position souhaitée, le disque (1) est fixé par un moyen de fixation (20 ; 36, 37) ; **caractérisé en ce que** le moyen de fixation comprend un manchon (36) ayant des filets sur sa surface interne et un collet (37) ayant des filets correspondants sur sa surface d'enveloppe et **en ce que**, lorsque le manchon (36) est vissé sur le collet (37), le moyen de rotation (30) est fixé contre toute expansion.

2. Aménagement selon la revendication 1, **caractérisé en ce que** le moyen de fixation comprend une portion mâle (23 ; 27) et au moins une portion femelle (2 ; 220 ; 36), respectivement, et **en ce que** l'une des portions a une position fixe par rapport au disque (1) en cours de rotation et l'autre portion a une position non fixe par rapport au disque (1).

3. Aménagement selon l'une quelconque des revendications précédentes, **caractérisé en ce que** le moyen de fixation (36, 37) est aménagé pour assurer un autre ajustement de la rotation du disque (1).

4. Aménagement selon l'une quelconque des revendications précédentes, **caractérisé en ce que** le moyen de fixation comprend un dispositif de verrouillage pivotant (20) aménagé pour empêcher le moyeu de rotor (40) de tourner encore.

5. Aménagement selon l'une quelconque des revendications précédentes, **caractérisé en ce que** le disque est un disque de frein (1).

6. Aménagement selon l'une quelconque des revendications précédentes, **caractérisé en ce que** le dispositif de raccordement (2) du disque de frein (1) est constitué de plusieurs alésages traversants uniformément distribués sur le disque de frein (1) à une certaine distance de l'axe (3) du disque de frein (1).

7. Aménagement selon l'une quelconque des revendications précédentes, **caractérisé en ce que** le dispositif de verrouillage (20) est aménagé à rotation autour d'une position fixe (21) à sa première extrémité et est pourvu d'un raccord de verrouillage (22) à son autre extrémité ou extrémité opposée, le raccord de verrouillage (22) étant aménagé pour s'ajuster dans le dispositif de raccordement (2) du disque de frein (1).

8. Aménagement selon l'une quelconque des revendications précédentes, **caractérisé en ce que** le moyen de rotation (30) est un cylindre hydraulique (34) et un piston hydraulique (35).

9. Aménagement selon la revendication 8, **caractérisé en ce que** le cylindre hydraulique (34) a un moyen de fixation (32) monté sur son piston (35), le moyen de fixation (32) ayant au moins un alésage traversant (330).

10. Procédé de montagne in situ de pales de rotor sur un moyeu de rotor d'une centrale d'éolienne comprenant des pales de rotor, un moyeu de rotor (40), un disque (1), un moyen de rotation (30) du disque (1) autour de son axe (3), le disque (1) étant raccordé au moyeu de rotor (40) de manière que, lorsque le disque (1) tourne d'un certain angle autour de son axe (3), il amène le moyeu de rotor (40) à tourner du même angle autour de l'axe du moyeu de rotor, le disque (1) étant pourvu d'un dispositif de raccordement, dans lequel, après avoir monté la première pale de rotor sur le moyeu de rotor, on effectue les étapes suivantes :
un moyen de rotation (30) fait tourner le disque (1) autour de son axe (3),
lorsque le moyen de rotation (30) parvient dans une position de course souhaitée, le moyen de rotation (30) est arrêté pour empêcher toute autre rotation et un moyen de fixation (20, 36, 37) est raccordé via le disque de frein (1) ou pour verrouiller le moyeu de rotor (40) à l'encontre d'une rotation via le disque de frein (1) ; **caractérisé en ce que** le moyen de fixation comprend un manchon (36), ayant des filets sur sa surface interne et un collet (37) ayant des filets correspondants sur sa surface d'enveloppe et **en ce que**, lorsque le manchon (36) est vissé sur le collet (37), le moyen de rotation (30) est fixé contre toute expansion.

11. Procédé selon la revendication 10, **caractérisé en ce que**, lorsque la dernière pale de rotor (51) a été montée sur le moyeu de rotor (40), le dispositif de verrouillage (20) et le moyen de rotation (30) sont déconnectés du disque.

12. Procédé selon la revendication 10 ou la revendication 11, **caractérisé en ce que** le moyen de rotation (30) est un cylindre hydraulique et un piston hydraulique (34, 35).

13. Centrale d'éolîenne, **caractérisée en ce qu'**elle comprend l'aménagement selon l'une quelconque des revendications 1 à 9.
